Europäisches Patentamt

European Patent Office

Office européen des brevets

(19)

(11) Publication number : **0 667 400 A1**

(12) ## EUROPEAN PATENT APPLICATION

(21) Application number : **95300438.9**

(22) Date of filing : **25.01.95**

(51) Int. Cl.⁶ : **C22C 38/18,** C22C 38/26, B01J 23/86, F01N 3/28

(30) Priority : **09.02.94 US 193824**

(43) Date of publication of application :
**16.08.95 Bulletin 95/33**

(84) Designated Contracting States :
**AT BE DE ES FR GB GR IT NL SE**

(71) Applicant : **ALLEGHENY LUDLUM CORPORATION
1000 Six PPG Place
Pittsburgh Pennsylvania 15222 (US)**

(72) Inventor : **Larsen, James Martin
5037 Bahama Drive
Pittsburgh, Pennsylvania 15239 (US)**

(74) Representative : **Coxon, Philip et al
Eric Potter & Clarkson
St. Mary's Court
St. Mary's Gate
Nottingham NG1 1LE (GB)**

(54) **Creep resistant iron-chromium-aluminium alloy substantially free of molybdenum.**

(57) A hot workable iron-chromium-aluminum alloy is provided being resistant to creep and having rare earths and niobium additions and being substantially free of molybdenum for oxidation resistance suitable for oxidation and creep resistant catalytic substrates and systems.

FIG. 1

EP 0 667 400 A1

## BACKGROUND OF THE INVENTION

### Field of Use

This invention relates to thermal cyclic oxidation resistant and hot workable iron-chromium-aluminum alloys with rare earth additions.

### Description of the Prior Art

It is known to provide iron-chromium-aluminum alloys having rare earth additions for the purpose of high temperature oxidation resistance and improved oxide surfaces. Generally, such alloys have properties which are useful in high temperature environments which require oxidation resistance and it has been proposed that they may be useful as a substrate material, such as for catalytic converters in the automobile industry, as well as for resistance heating elements and radiant heating elements in gas or oil stoves. As a catalytic substrate, a metallic substrate offers many advantages over present ceramic substrates. For example, a metal substrate is substantially more shock resistant and vibration resistant, as well as having a greater thermal conductivity, than ceramic. Furthermore, a metallic substrate can be more easily fabricated into thin foil and fine honeycomb configurations to provide greater surface area and lighter weight.

U.S. Patent 4,414,023, issued November 8, 1983, discloses an oxidation resistant ferritic stainless steel alloy containing 8-25% chromium, 3-8% aluminum, and the addition of at least 0.002 up to 0.05% rare earths from the group consisting of cerium, lanthanum, neodymium, and praseodymium, with a total of all rare earths up to 0.06%. The alloy may also be stabilized with zirconium or with niobium. Niobium stabilization was based on a formula to provide elevated temperature creep strength after high temperature annealing with the least adverse effect on thermal cyclic oxidation resistance.

U.S. Patent 3,852,063, issued December 3, 1974, describes an iron-chromium-aluminum alloy characterized by high temperature corrosion resistance and high temperature strength primarily through solid solution treatment. The alloy includes 0.2 to 3.0% molybdenum, 0.05 to 3.0%, preferably, 0.1 to 0.5% of an element selected from the group consisting of niobium and tantalum and at least one element selected from the group of yttrium, beryllium, and boron. Creep resistance is not described.

U.S. Patent 4,286,986, issued September 1, 1981, discloses a creep resistant stainless steel with 11-20% chromium, 0-5% aluminum, up to 1.5% silicon, up to 5% molybdenum, and specified amounts of niobium ranging from 0.63-1.15%. By annealing the steel to at least 1900°F (1038°C), the creep life at 1600°F (87°C) at 1200 psi (7.3 MPa) is improved. The alloy does not contain any rare earth additions and does not describe thermal cyclic oxidation resistance.

U.S. Patent 4,859,649, issued August 22, 1989, describes a creep and oxidation resistant iron-chromium-aluminum alloy containing 0.1-1.0% molybdenum, 0.003 to 0.8% rare earths, additions of titanium and zirconium, and up to 0.5% niobium for stability and creep resistance.

A rolled high aluminum stainless steel foil for use as a substrate for a catalyst carrier is described in U.S. Patent 4,870,046, issued September 26, 1989. To avoid embrittlement and to aid in stability, the alloy contains at least one element from the group consisting of titanium, niobium, zirconium, and hafnium. There is no disclosure of niobium for purposes of either high temperature strength or creep resistance. The alloy optionally may contain up to 0.5% rare earths and 0.5-5% of molybdenum, tungsten, and cobalt to improve high temperature strength.

U.S. Patent 5,045,404, issued September 3, 1991, describes a heat resistant stainless steel foil for a catalyst carrier being an iron-chromium-aluminum alloy including more than 0.06% rare earths, in the form of lanthanoids, and either or both of titanium and niobium to improve the toughness of the hot rolled strip by stabilizing carbon and nitrogen. Titanium and niobium may be used separately or in combination to improve the toughness without an adverse effect on the oxidation resistant of a catalyst carrier.

Generally, molybdenum is known to enhance high temperature mechanical behavior in ferritic stainless steels. Specifically, molybdenum is known to improve creep strength and pitting and corrosion resistance. At moderate levels, molybdenum can cause an effect known as catastrophic oxidation. The effect is generally related to the volatility of molybdenum oxide at very high temperatures.

Impending automotive emission requirements are pushing new catalytic converter designs so that the creep resistance of the catalytic core alloy is becoming very important. Some designs include a core which is heated by direct current electrical resistance. In order to reduce total weight and limit the amount of electrical power required to heat the core assembly to a desired temperature, there has been an effort to reduce substrate thickness from the current standard of 0.002 inch (0.051 mm.). By reducing the cross section of the foil strip, the thinner material would require a higher mechanical integrity at elevated temperatures. Furthermore, it has been found that the oxide scale growth on fabricated core assemblies can generate tensile stresses in the underlying metal foil substrate that are large enough to cause permanent deformation through creep.

In pending U.S. application (RL-1577) Serial No. _____, filed _____ and assigned to the same assignee of this patent application, an iron-chromium-aluminum alloy having rare earth additions and effective amounts of niobium up to 0.8%, preferably 0.1 to 0.55% for resistance to creep and secondary grain growth.

There still exists a need for an iron-chromium-aluminum alloy which can be produced through lower cost melting processes and which is resistant to thermal cyclic oxidation resistance. Preferably, such an alloy should have improved creep resistance while still providing for sufficient hot workability of the alloy. Furthermore, it is desired that with special raw material selection an alloy be capable of improving the creep resistance of the alloy without diminishing the oxidation resistance.

## BRIEF DESCRIPTION OF THE DRAWINGS

Figure 1 is a plot of stress-rupture tests at 900°C at different molybdenum levels.
Figures 2 and 3 are plots of oxide breakaway time as a function of molybdenum.
Figure 4 is a plot of parabolic rate constant as a function of molybdenum.

## SUMMARY OF THE INVENTION

In accordance with the present invention, a hot workable ferritic stainless steel alloy is provided which is resistant to thermal cyclic oxidation and creep at elevated temperatures. The alloy consists essentially of, by weight, 10-25% chromium, 3-8% aluminum, up to 4% silicon, up to 1% manganese, up to 0.8% rare earths, an effective amount of niobium up to 1.5% for creep resistance, no more than 0.10% molybdenum, the balance iron and normal steel making impurities.

An oxidation and creep resistant catalytic substrate having a hot workable ferritic stainless steel alloy is also provided.

## DETAILED DESCRIPTION OF THE PREFERRED EMBODIMENTS

In general, there is provided an iron-chromium-aluminum ferritic stainless steel alloy with rare earth additions, the alloy having thermal cyclic oxidation resistance and maintaining good hot workability with improved creep resistance while avoiding a degradation in oxidation resistance.

As used herein, all composition percentages are percent by weight.

The chromium level may range from 10-25% and preferably from 19 to 21% in order to provide the desired properties, such as corrosion and oxidation resistance. The levels of chromium are limited to avoid unnecessary hardness and strength which could interfere with the formability of the alloy. The adequate and desirable thermal cyclic oxidation resistance can be achieved with chromium as low as 10%. Above 25% chromium, however, there is increased difficulty in fabrication of the alloy.

The aluminum content in the alloy provides increased oxidation resistance at elevated temperatures, reduces the amount of overall chromium needed, and tends to increase the resistance to scaling. Aluminum is necessary in the alloy to provide a source for the formation of the alumina (aluminum oxide-$Al_2O_3$) surface. Generally, the aluminum is present in the alloy ranging from 3-8%. Below about 3% the cyclic oxidation resistance tends to become unacceptably low. Above about 8%, the alloy tends to suffer from lowered workability. Preferably, aluminum ranges from 4.5 to 5.5% to provide the desired combination of oxidation resistance at elevated temperatures, processability of the alloy, and thermal expansion coefficient.

Rare earth metal additions are essential to the adherence of the aluminum oxide surface. Rare earth metals suitable for the present invention may be those from the lanthanide series of 14 rare earth elements. A common source of the rare earths may be as mischmetal which is a mixture primarily of cerium, lanthanum, neodymium, praseodymium, and samarium. Preferably, the alloy contains at least additions of cerium or lanthanum, or a combination of them, to assure adherence of the alumina scale and to provide a scale which is characterized by its ability to be texturized into an aluminum oxide surface having a desirable morphology. Mischmetal is a relatively inexpensive mixture or rare earth elements and may be used as an alloying addition.

The rare earth addition may range up to 0.8% since it primarily affects oxidation resistance and not high temperature creep or stress-rupture of the alloy. Preferably, the alloy of the present invention contains a rare earth addition in the form of at least 0.002% from the group consisting of cerium and lanthanum and a total content of rare earth metals, cerium and lanthanum not to exceed 0.05%. Preferably, the total of all rare earth metals should not exceed about 0.06%, as described in the above-mentioned U.S. Patent 4,414,023. Greater levels of rare earths may or may not improve the resistance to oxidation and scaling or the adherence of the oxide scale, but it does tend to decrease the hot workability at normal steel hot working temperatures of about 1900°-2350°F (1038°-1288°C). Preferably, the rare earths consist primarily of 0.005 to 0.035% cerium.

Silicon may be present at amounts up to 4% and preferably up to 1%, and more preferably 0.2 to 0.6%. The presence of silicon generally tends to improve the general oxidation resistance and improves the fluidity of the molten metal and the ability to cast the alloy into thin sections. Silicon is also a commonly used element for deoxidation in the production of steel and appears to have only a neutral or slightly beneficial effect upon oxide adherence. Silicon can contribute to the brittleness of the alloy during cold working, which is most notable when the chromium content is below 14%. For that reason, preferably, silicon may range up to 1% without adversely affecting the hot workability of the alloy.

Manganese levels may range up to 1% and preferably up to 0.5%. Such manganese levels provide for efficient fabrication and avoid unnecessary hardness and strength which could interfere with the formability and hot workability of the alloy.

The alloy is substantially free of titanium which appears to have a strong adverse affect on the thermal cyclic oxidation resistance of the alloy. As described in U.S. Patent 4,414,023, stabilizing elements generally will adversely affect thermal cyclic oxidation resistance of the alloy, but titanium appears to have the most adverse effect such as when compared to zirconium and niobium.

The present invention includes the additions of niobium ranging from an effective amount up to 1.5%, preferably up to 0.8%, more preferably 0.1 to 0.55%, most preferably 0.28 to 0.55% for creep resistance. As was found in my previous work, niobium was found to have the least adverse effect on thermal cyclic oxidation resistance while improving elevated temperature creep strength after high temperature annealing. Specific and controllable improvements in stress-rupture time tests, which are indicative of the creep resistance of the alloy, can be made with controlled additions of niobium as described in co-pending application (RL-1577) Serial No. _____, filed _____. Excessive amounts of niobium can be detrimental to hot workability. The Laves phase precipitation may also increase the work hardening rate at lower temperatures thereby requiring additional annealing steps during cold rolling which would raise the cost of production of the material. Such additional steps become very costly when the alloy is rolled to thin foil gauges. It has been found that the niobium additions can have the effect of retarding recrystallization through the Laves phase grain boundary pinning which results in making hot working more difficult. As a result, higher intermediate and final annealing temperatures, as well as slower line speeds, would be required for cold rolling to thin foil gauges in the event of excessive amounts of niobium.

It has been found that the creep strength of the iron-chromium-aluminum alloy can be predetermined based on the final end-use application of the material in order to avoid unnecessarily large amounts of niobium.

Niobium levels above about 0.8% increase the difficulties associated with hot working the alloy. More grinding and conditioning, for example, would be required to remove small cracks, or higher temperature annealing practices would be required. Preferably, niobium may be selected within the preferred range of 0.1 to 0.55% to achieve the desired level of creep resistance to accommodate the creep strength necessary for the end-use application. Such careful selection would optimize production processing in order to define the necessary processing to meet the creep strength requirements. Preferably, niobium may range from 0.28 to 0.55%, or even 0.4 to 0.55% in order to optimize both the creep strength and mechanical behavior of the alloy when fabricated into end-use products which are subjected to certain high temperature vibration tests. It was found that excessive grain growth from very high temperature exposure on the order of greater than about 1900°F (1038°C) may adversely affect short term mechanical behavior in end-use testing. An additional benefit of controlled amounts of niobium appears to have a beneficial effect on whiskerability, which is the ability to form a uniformly texturized aluminum oxide surface, such as "whiskers." Conventional or known processes for forming the desired aluminum oxide surface may be used with the alloy of the present invention.

The improvement of the present invention is the finding that molybdenum has a strong and deleterious effect on oxidation resistance of iron-chromium-aluminum alloys. The alloy should be substantially free of molybdenum. Molybdenum of no more than 0.10% can be tolerated; however, increasing amounts within the range adversely effects high temperature oxidation resistance. Preferably, molybdenum is maintained at less than 0.07%, more preferably less than 0.05%. Special raw material selection can help control molybdenum contents. Less than 0.01% molybdenum does not appear to produce further improvements in oxidation resistance, but requiring less than 0.01% would add significantly to the cost of production because of the very stringent raw material and melting requirements.

An alloy combining both the controlled range of niobium of 0.1 to 0.55% and the low residual levels of molybdenum to less than 0.10%, preferably 0.01 to 0.07%, optimizes properties of creep and oxidation resistance not before realized.

In making the alloy of the present invention, a melt of the alloy may be prepared by any conventional processes, including electric arc furnaces, argon-oxygen-decarburization (AOD), and vacuum induction melting processes. The alloy of the present invention will require some special raw material selection but no special melting processes, such as vacuum melting. Preferably, the normal steel making impurities of oxygen, nitrogen, and sulfur are reduced prior to additions of the rare earths to the melt. The melt can then be cast continuously into slabs, or cast into ingots and worked into plate, bars, strips, or sheets. The steel can then be hot and cold rolled and subjected to conventional processes, such as descaling and annealing, prior to fabrication into the desired shape.

In order to more completely understand the present invention, the following Examples are presented.

Example 1

The alloys of the present invention shown in the following Table I are made by alloying the elements in a molten state. The alloys shown in the Table were melted by vacuum induction into 50 pound Heats. Generally, the ingots were heated to about 2300°F (1260°C) for hot rolling to bars six inches wide by one inch (15.2 x 2.5 cm) thick, then hot rolled to 0.100 inch (0.25 cm) thick. The alloy for Heats RV 631 through RV 636 and RV 702 are shown in the following Table.

Table I

|  | RV 631 | RV 632 | RV 633 | RV 634 | RV 635 | RV 636 | RV 702 |
|---|---|---|---|---|---|---|---|
| Cb | 0.82 | 0.55 | 0.28 | .54 | 0.28 | 0.54 | 0.43 |
| Mo | 0.09 | 0.089 | 0.089 | 1.03 | 0.13 | 0.09 | 0.034 |
| Ti | 0.003 | 0.008 | 0.008 | 0.009 | 0.20 | 0.21 | — |
| Ce | 0.017 | 0.019 | 0.011 | 0.018 | 0.017 | 0.014 | 0.013 |
| La | 0.002 | 0.003 | 0.003 | 0.003 | 0.002 | 0.003 | — |
| Cr | 19.98 | 19.90 | 19.96 | 20.18 | 19.93 | 20.05 | 19.88 |
| Al | 5.40 | 5.34 | 5.32 | 5.25 | 5.18 | 5.29 | 5.14 |
| Si | 0.47 | 0.51 | 0.50 | 0.50 | 0.50 | 0.50 | 0.49 |
| Mn | 0.25 | 0.25 | 0.25 | 0.24 | 0.25 | 0.24 | 0.25 |
| C | 0.014 | 0.014 | 0.014 | 0.013 | 0.013 | 0.014 | 0.010 |
| Ni | 0.12 | 0.13 | 0.12 | 0.12 | 0.13 | 0.13 | 0.14 |
| P | 0.012 | 0.013 | 0.011 | 0.011 | 0.012 | 0.012 | 0.013 |
| N | 0.0014 | 0.0014 | 0.0014 | 0.0015 | 0.0014 | 0.0014 | — |
| S | 0.0036 | 0.0022 | 0.0020 | 0.0022 | 0.0044 | 0.0021 | 0.0008 |
| Ca | 0.001 | 0.001 | <0.001 | <0.001 | 0.002 | <0.001 | <0.0005 |
| Mg | <0.001 | <0.001 | <0.001 | <0.001 | <0.001 | <0.001 | — |

Heat 41303 was commercially melted to a typical commercial alloy composition in accordance with U.S. Patent 4,414,023 and is treated as the Control Heat. It contains no niobium and 0.034% molybdenum.

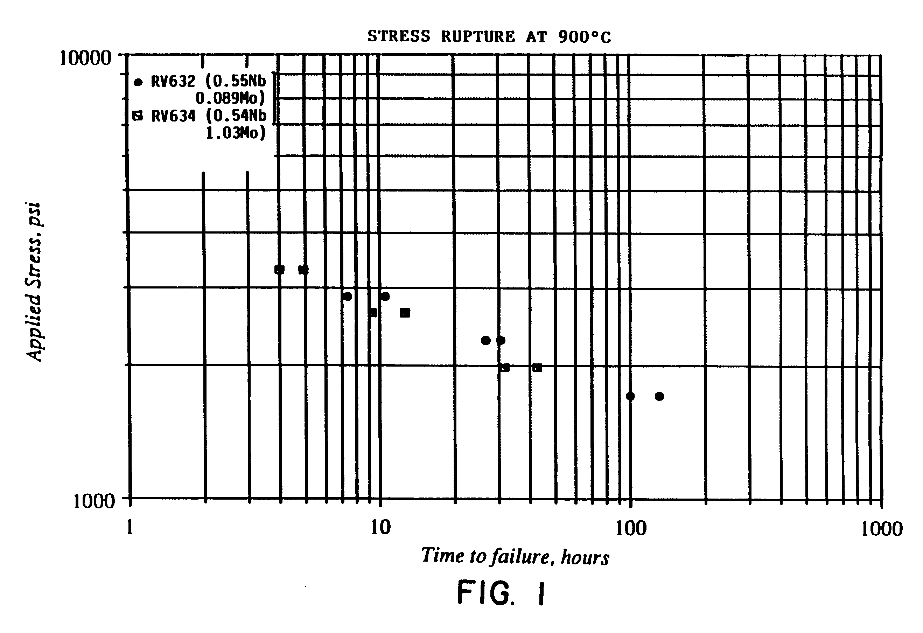

In order to demonstrate the creep resistance of the alloy of the present invention, several Heats of Table I were studied by conducting stress-rupture tests at various temperatures on cold rolled strip at 0.030 inch (0.076 cm) gauge. The stress-rupture test is conducted by applying a static tensile load to a heated alloy specimen according to the method ascribed in ASTM E-139, and measuring the time for the specimen to break. Stress-rupture data generated at 900°C is shown graphically in Figure 1. Figure 1 illustrates the stress-rupture data for Heat RV 632 and Heat RV 634 having 0.55% and 0.54% niobium, respectively. In Figure 1, the two Heats illustrate that there is no appreciable difference in stress-rupture (creep) behavior at 0.09% and 1.03% of molybdenum.

Stress-rupture data at 850 and 900°C was also generated for Heats RV 631-634 and 702 each containing varying niobium content. The effects of increasing niobium at levels below 0.8% are exhibited as improved creep strength. Niobium additions of as little as 0.28% cause a noticeable improvement in rupture times. No discernable difference in rupture times was observed between 0.55 and 0.82% at either 850°C (1562°F) or 900°C (1652°F).

As described in my co-pending application (RL-1577) Serial No. _____, filed _____ _____, it can be concluded that alloys of the present invention having controlled amounts of niobium within the broad range of up to 0.8% and within the preferred range of 0.1 to 0.55% exhibit even greater resistance to creep at higher temperatures when compared with alloys having insufficient amounts of niobium.

As for isothermal oxidation resistance, a primary criterion by which catalytic substrate alloys are judged is known as "time to breakaway" or "breakaway time", $t_b$. This is the length of time at a given temperature up to which weight gain due to the $\alpha$-$(Al,Cr)_2O_3$ oxidation process follows the expected parabolic law, where the rate of weight gain diminishes with time. Following $t_b$, oxidation proceeds at an accelerated rate and the sample foil becomes extremely brittle due to rapid oxidation of Fe and Cr. Since breakaway oxidation is associated with a point at which aluminum in the alloy has been consumed to a low level, it is strongly dependent on sample thickness. Deviations from parabolic oxidation can also be caused by conditions which lead to internal oxidation or the presence of elements that encourage undesirable spinel formation. Spinels are iron and chromium containing non-adherent non-protective oxides.

For this discussion, the oxide is entirely $Al_2O_3$ and kinetics are dependent on $Al_2O_3$ formation. Alpha-$Al_2O_3$ oxidation prior to breakaway obeys the parabolic relation

$$(\Delta W/A)^2 = Kt + C,$$

where $\Delta W$ is change in weight, A is total surface area, t is time, and K and C are empirically determined constants. Since the total Al content of a foil sample is proportional to its thickness, it follows that the time at which Al is depleted to a low level (and accordingly $t_b$) is proportional to the square of the sample thickness.

## Example 2

Another series of alloys shown in Table II were melted in a manner similar to that described in Example I. The alloy Heats RV 708 and RV 715 were also cold rolled from the 0.100 inch (0.25 cm) hot roll band gauge to the cold rolled gauge of 0.030 inch (0.076 cm). The hot roll band was descaled, conditioned as necessary, and then cold rolled. Some of the strip was preheated or intermediate annealed, if necessary, before cold rolling to 0.002 inch (0.005 cm) final gauge.

Table II

|  | RV 708 | RV 709 | RV 710 | RV 711 | RV 712 | RV 713 | RV 714 | RV 715 |
|---|---|---|---|---|---|---|---|---|
| Cb | 0.26 | 0.26 | 0.27 | 0.27 | 0.27 | 0.26 | .027 | .027 |
| Mo | 0.012 | 0.015 | 0.026 | 0.037 | 0.050 | 0.059 | 0.068 | 0.078 |
| Ce | 0.018 | 0.022 | 0.040 | 0.033 | 0.038 | 0.040 | 0.034 | 0.038 |
| Cr | 19.44 | 19.80 | 19.72 | 19.89 | 19.77 | 19.92 | 19.95 | 19.89 |
| Al | 5.17 | 5.24 | 5.28 | 5.21 | 5.24 | 5.15 | 5.16 | 5.10 |
| Si | 0.40 | 0.46 | 0.45 | 0.47 | 0.44 | 0.49 | 0.49 | 0.49 |
| Mn | 0.27 | 0.26 | 0.25 | 0.25 | 0.25 | 0.24 | .025 | 0.25 |
| C | 0.0086 | 0.0094 | 0.0118 | 0.0099 | 0.0081 | 0.0114 | 0.0104 | 0.0091 |
| Ni | 0.14 | 0.15 | 0.14 | 0.13 | .013 | 0.14 | 0.14 | 0.14 |
| P | 0.013 | 0.013 | 0.013 | .013 | 0.012 | 0.012 | .013 | 0.012 |
| N | 0.0076 | 0.0061 | 0.0087 | 0.0091 | 0.010 | 0.0082 | 0.0105 | 0.0101 |
| S | 0.0019 | 0.0017 | 0.0009 | 0.0016 | 0.0009 | 0.0013 | 0.0017 | 0.0018 |
| Ca | <0.001 | <0.001 | <0.001 | <0.001 | <0.001 | <0.001 | <0.001 | <0.001 |

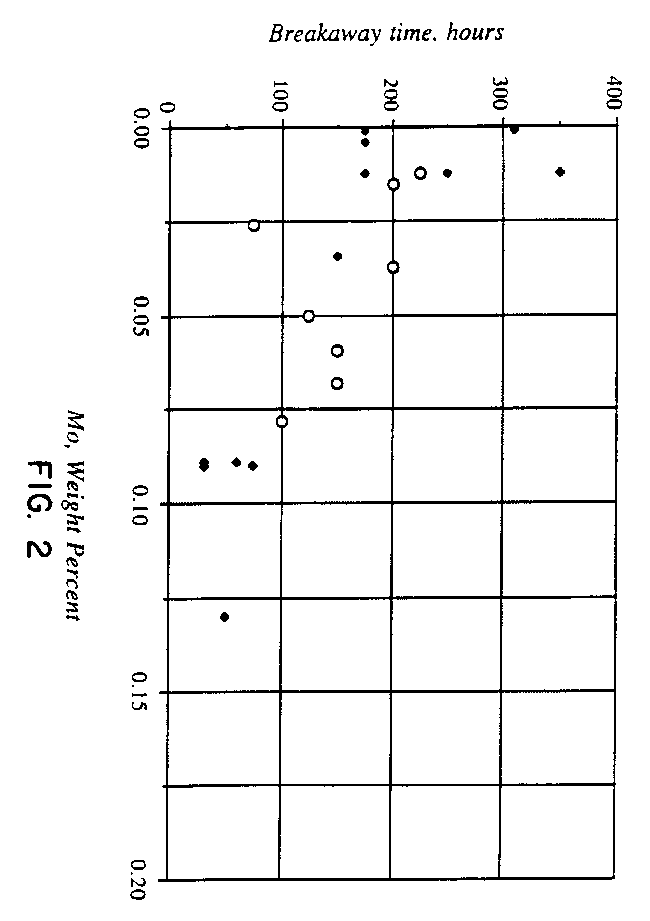

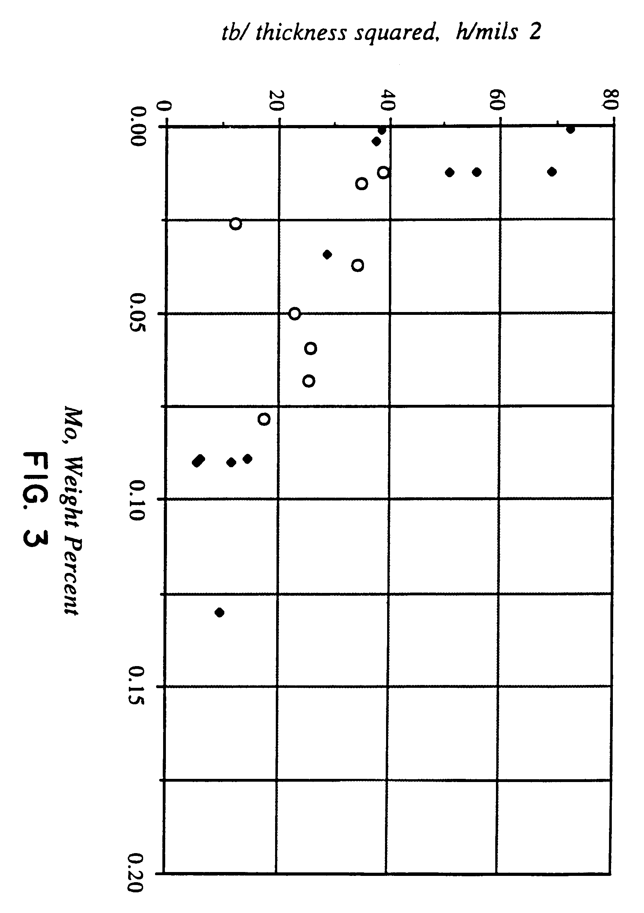

Isothermal oxidation resistance of foil samples of each alloy of Table II and Table I of Example 1 was measured at 2100°F (1150°C) for a series of times. The oxidation data was generated by measuring weight gain after heating in air. Figure 2 graphically shows the breakaway time as a function of molybdenum content. To determine whether small sample thickness variations affect the data, the weight gain per unit area data were normalized by dividing by the square of the original sample thickness. Figure 3 graphically depicts that calculated value as a function of molybdenum content in order to account for the parabolic oxide growth kinetics.

In Figures 2 and 3, the closed diamond data points represent Heats of Table I and other Fe-20Cr-5Al-REM alloys wherein the alloy compositions included variations in niobium and titanium, as well as molybdenum. The open circle data points represent the alloys of Table II specifically melted with varying molybdenum concentrations while trying to hold the rest of the composition constant. The data of heat RV710 (0.026% Mo) shown in Figures 2 and 3 is an aberration and not explainable.

Figure 3 shows that the sample thickness does not play a determining role in these oxidation data. In other words, the generated data were independent of small variations of thickness in the test samples.

Not shown in Figures 2 and 3 is data for a heat at 1.03% molybdenum where the breakaway time, $t_b$, was 50 hours. When factoring in the sample thickness as shown in Figure 3, the value $t_b$/thickness squared was 12.5 hr/mil$^2$.

Figures 2 and 3 indicate that an iron-chromium-aluminum alloy containing nominally 20% chromium, 5% aluminum, rare earths, less than 0.82% niobium, and less than about 0.1% molybdenum have much longer breakaway times than those Heats with more molybdenum. This effect is fully realized with molybdenum as low as 0.012%. Further lowering of molybdenum does not appear to produce further improvement in $t_b$, breakaway time.

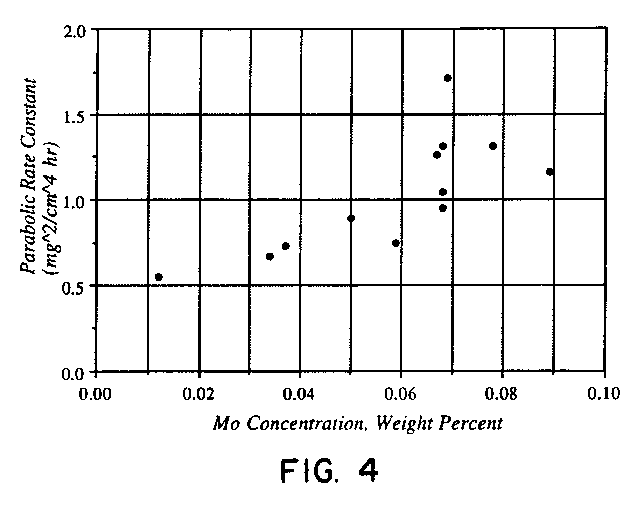

There is also a negative correlation between parabolic rate constants and molybdenum content in the alloys, as shown in Figure 4, at 2100°F (1149°C). The parabolic rate constant increases with molybdenum content. Together, Figures 2, 3, and 4 indicate that molybdenum has the effect of shortening breakaway times by increasing the rate of oxidation and thereby, the rate of aluminum depletion from the alloy.

The parabolic rate constants were determined by plotting specific weight gain squared against time up to the breakaway time, $t_b$. The data was analyzed using a least-squares fit.

The novelty of the present invention shows the unexpected result that niobium has far more effect on creep strength than molybdenum, but that careful control of molybdenum is necessary to maximize the oxidation resistance of iron-chromium-aluminum-rare earth alloys having improved creep resistance. By the present invention it was found that oxidation resistance is sacrificed when molybdenum is present above about 0.10%, preferably above 0.07% and that hot working problems increase.

7

The normal steelmaking residuals may also be present as well as carbon, nitrogen, boron, phosphorus and sulfur. By limiting molybdenum to low residual levels, methods must be established to use low molybdenum melt stock since no means are currently available for the liquid metal removal of molybdenum from a molten charge of steel. It is expected that active control of the melting process will be necessary to routinely limit molybdenum levels.

The hot workable ferritic stainless steel alloy of the present invention having improved thermal cyclic oxidation resistance as well as improved creep resistance as measured by stress-rupture testing which can be adjusted by careful composition control. Such improvements have been achieved with controlled molybdenum to enhance the oxidation resistance, which is one of the most important properties for some end-use applications for the material, such as for catalytic substrates.

While several embodiments of the present invention have been shown and described, it will be apparent to those skilled in the art that modifications can be made therein without departing from the scope of the invention.

## Claims

1. A hot workable ferritic stainless steel alloy resistant to thermal cyclic oxidation and creep, the alloy comprising, by weight percent, 10-25 chromium, 3-8 aluminum, up to 4 silicon, up to 1 manganese, up to 0.8 rare earths, an effective amount of up to 0.8 niobium for creep resistance, no more than about 0.10 molybdenum for oxidation resistance, the balance iron and normal steelmaking impurities.

2. The alloy of claim 1 having less than 0.09 molybdenum.

3. The alloy of claim 2 having less than 0.05 molybdenum.

4. The alloy of claim 1 having 0.01 to 0.07 molybdenum.

5. The alloy of any one of the preceding claims having 0.1 to 0.55 niobium.

6. The alloy of any one of the preceding claims having 0.002 to 0.06 rare earths.

7. The alloy of any one of the preceding claims having 19 to 21 chromium, 4.5 to 5.5 aluminum, 0.2 to 0.6 silicon, 0.1 to 0.55 niobium, no more than about 0.07 molybdenum, and the primary constituent of rare earths being 0.005 to 0.035 cerium.

8. An oxidation and creep resistant catalytic substrate comprising a hot workable ferritic stainless steel alloy of any one of claims 1 to 7.

9. A catalyst system comprising the substrate of claim 8.

10. A hot workable ferritic stainless steel alloy resistant to thermal cyclic oxidation and creep, and alloy comprising, by weight percent, 19 to 21 chromium, 4.5 to 5.5 aluminum, up to 1 silicon, up to 1 manganese, 0.005 to 0.035 cerium, 0.1 to 0.55 niobium, less than 0.09 molybdenum for oxidation resistance, the balance iron and normal steelmaking impurities.

STRESS RUPTURE AT 900°C

- RV632 (0.55Nb 0.089Mo)
- RV634 (0.54Nb 1.03Mo)

Applied Stress, psi

Time to failure, hours

FIG. 1

FIG. 2

tb/ thickness squared, h/mils 2

Mo, Weight Percent

FIG. 3

FIG. 4

**European Patent Office**

## EUROPEAN SEARCH REPORT

Application Number

EP 95 30 0438

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X,D | EP-A-0 091 526 (ALLEGHENY LUDLUM STEEL) 19 October 1983 | 1-6,8 | C22C38/18 C22C38/26 B01J23/86 F01N3/28 |
| Y | * Tables, in particular sample RV8885C * | 1-6,8 | |
| X,D | EP-A-0 429 793 (NIPPON STEEL CORP ;TOYOTA MOTOR CO LTD (JP); NIPPON KINZOKU CO LTD) 5 June 1991 | 1-6,8 | |
| Y | * Tables, in particular examples A8 and A9 * | 1-6,8 | |
| X,Y | PATENT ABSTRACTS OF JAPAN vol. 014 no. 582 (C-0792) ,26 December 1990 & JP-A-02 254136 (NIPPON STEEL CORP;OTHERS: 02) 12 October 1990, * Table 1, examples X3 and X7 * * abstract * | 1-6,8 | |
| X,Y | DATABASE WPI Section Ch, Week 7508 Derwent Publications Ltd., London, GB; Class M27, AN 75-13515W & JP-A-49 115 927 ( KAWASAKI STEEL CORP) , 6 November 1974 * Tables, in particular examples 24-26* * abstract * | 1-6,8 | TECHNICAL FIELDS SEARCHED (Int.Cl.6) C22C B01J F01N |
| Y,D | EP-A-0 024 124 (ALLEGHENY LUDLUM STEEL) 25 February 1981 * Page 7, lines 2-5 and examples * | 1-6,8 | |

-/--

The present search report has been drawn up for all claims

| Place of search | Date of completion of the search | Examiner |
|---|---|---|
| MUNICH | 8 June 1995 | Pivalica-Bjoerk, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

**European Patent Office**

**EUROPEAN SEARCH REPORT**

Application Number

EP 95 30 0438

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A,D | SOCIETY OF AUTOMOTIVE ENGINEERS, vol. 810035, 1981 PENNSYLVANIA, USA, pages 1-13, JOHNSON, J.N. 'INFLUENCE OF COLUMBIUM ON THE 870 C CREEP PROPERTIES OF 18% CHROMIUM FERRITIC STAINLESS STEELS' * Page 10: "Molybdenum-free steels" * ----- | 1-9 | |

TECHNICAL FIELDS SEARCHED      (Int.Cl.6)

The present search report has been drawn up for all claims

| Place of search | Date of completion of the search | Examiner |
|---|---|---|
| MUNICH | 8 June 1995 | Pivalica-Bjoerk, P |